# EUROPÄISCHE PATENTANMELDUNG

(11) **EP 4 362 168 A1**
(43) Veröffentlichungstag der Anmeldung: **01.05.2024**
(21) Anmeldenummer: 22203938.0
(22) Anmeldetag: 26.10.2022
(51) Int. Cl.: H01M 10/54, H01M 4/38, H01M 4/525, H01M 4/58, H01M 4/587, H01M 10/052, H01M 10/0525, H01M 10/054, H01M 12/08

(54) **VERFAHREN ZUM WIEDERVERWERTEN VON ALKALIMETALL-BATTERIEN UND BATTERIE-AUFBEREITUNGSANLAGE**

(71) Anmelder: Duesenfeld GmbH, 38176 Wendeburg (DE)
(72) Erfinder: Bußmann, Till, 30938 Burgwedel (DE)
(74) Vertreter: Gramm, Lins & Partner Patent- und Rechtsanwälte PartGmbB

(57) **Zusammenfassung**

Die Erfindung betrifft ein Verfahren zum Wiederverwerten von Alkalimetall-Batterien (12), insbesondere Li-Batterien oder Na-Batterien, die ein Aktivmaterial, eine Trägerfolie, auf der das Aktivmaterial angeordnet ist, Binder, mit dem das Aktivmaterial mit der Trägerfolie verbunden ist, einen flüssigen Elektrolyten, Leitsalz (38) und ein Gehäuse, das Aktivmaterial, Trägerfolie und Binder umgibt, aufweist, mit dem Schritt Zerkleinern der Alkalimetall-Batterien (12), sodass Zerkleinerungsgut, das Schwarzmasse (30), die das Aktivmaterial und den Binder enthält, entsteht, mit den Schritten Waschen des Zerkleinerungsguts mit einem Wasch-Lösungsmittel (36), sodass Leitsalz (38) ausgewaschen wird und der Binder nicht ausgewaschen wird, sodass leitsalzarmes Zerkleinerungsgut und eine Wasch-Flüssigkeit (40) erhalten werden, Regenerieren des Wasch-Lösungsmittels (36) aus der Wasch-Flüssigkeit (40), und insbesondere durch Destillieren, und Waschen des Zerkleinerungsguts mit zumindest einem Teil des regenerierten Wasch-Lösungsmittels (36).

## Beschreibung

Die Erfindung betrifft ein Verfahren zum Wiederverwerten von Alkalimetall-Batterien, insbesondere Li-Batterien oder Na-Batterien, die (a) ein Aktivmaterial, insbesondere Graphit oder Silizium, (b) eine Trägerfolie, auf der das Aktivmaterial angeordnet ist, (c) Binder, mit dem das Aktivmaterial mit der Trägerfolie verbunden ist, (d) einen, insbesondere flüssigen, Elektrolyten und (e) Leitsalz aufweist. Vorzugsweise umfasst die Alkalimetall-Batterie zudem ein Gehäuse, sie kann aber auch gehäusefrei sein. Das Verfahren weist den Schritt des Zerkleinerns der Alkalimetall-Batterien, sodass Zerkleinerungsmaterial entsteht, das Schwarzmasse, die das Aktivmaterial und den Binder enthält, auf.

Gemäß einem zweiten Aspekt betrifft die Erfindung eine Batterie-Aufbereitungsanlage zum Wiederverwerten von Alkalimetall-Batterien, insbesondere Li-Batterien oder Na-Batterien, mit (a) einer Zerkleinerungsanlage zum Zerkleinern der Alkalimetall-Batterien.

Alkalimetall-Batterien werden in großem und zunehmendem Umfang eingesetzt, um elektrische Verbraucher mit Energie zu versorgen. Insbesondere finden Alkalimetall-Batterien als Traktionsbatterien von Elektrofahrzeugen Verwendung. Elektrofahrzeuge werden insbesondere deshalb vermehrt eingesetzt, weil sie bei der Benutzung zu weniger CO2-Emissionen führen können. Um den CO2-Fußabdruck von Elektrofahrzeugen zu vermindern, ist eine möglichst effiziente und ressourcenschonende Aufbereitung von Alkalimetall-Batterien wünschenswert.

Der Erfindung liegt die Aufgabe zugrunde, das Wiederverwerten von Alkalimetall-Batterien zu verbessern.

Die Erfindung löst das Problem durch ein gattungsgemäßes Verfahren mit den Schritten (ii) Waschen des Zerkleinerungsmaterials mit einem Wasch-Lösungsmittel, sodass Leitsalz ausgewaschen wird und der Binder nicht ausgewaschen wird, sodass leitsalzarmes Zerkleinerungsmaterial und eine Wasch-Flüssigkeit erhalten werden, (iii) Regenerieren des Wasch-Lösungsmittels aus der Wasch-Flüssigkeit und (iv) Waschen des Zerkleinerungsmaterials mit zumindest einem Teil des regenerierten Wasch-Lösungsmittels.

Gemäß einem zweiten Aspekt löst die Erfindung das Problem durch eine gattungsgemäße Batterie-Aufbereitungsanlage mit (b) einer Waschvorrichtung, die ausgebildet und angeordnet ist zum Waschen zumindest einer Fraktion des Zerkleinerungsmaterials, insbesondere von Schwarzmasse, mit einem Wasch-Lösungsmittel, sodass leitsalzarmes Zerkleinerungsmaterial und eine Wasch-Flüssigkeit erhalten werden, und (c) einem Regenerierer, der (i) ausgebildet ist zum automatischen Regenerieren von Wasch-Lösungsmittel aus der Wasch-Flüssigkeit, (ii) einer Zuleitung, die mit der Waschvorrichtung zum Leiten von Wasch-Flüssigkeit von der Waschvorrichtung zum Regenerierer verbunden ist, und (iii) einer Rückleitung, die mit der Waschvorrichtung zum Leiten von Wasch-Lösungsmittel vom Regenerierer zur Waschvorrichtung verbunden ist, aufweist.

Vorteilhaft an der Erfindung ist, dass das Leitsalz meist in großem Umfang zurückgewonnen werden kann. Das so zurückgewonnene Leitsalz kann erneut in Alkalimetall-Batterien verwendet werden. Dazu kann es vorteilhaft sein, das Leitsalz von der Wasch-Flüssigkeit oder einer Fraktion der Wasch-Flüssigkeit abzutrennen. Es kann zudem vorteilhaft sein, das Leitsalz danach zu reinigen, beispielsweise durch Auskristallisieren und/oder durch Raffinieren.

Vorteilhaft ist zudem, dass das Verfahren in der Regel so durchgeführt werden kann, dass sich beim Auswaschen des Leitsalzes im Wesentlichen kein Fluorwasserstoff bildet. Dadurch kann das im Leitsalz gebundene Fluor in großem Umfang, vorzugsweise zu zumindest 95 Gewichtsprozent, insbesondere zumindest 97 Gewichtsprozent, besonders bevorzugt zumindest 99 Gewichtsprozent, zurückgewonnen werden.

Günstig ist zudem, dass häufig der Elektrolyt in vergleichsweise hoher Reinheit zurückgewonnen werden kann. Es hat sich gezeigt, dass so reiner Elektrolyt zurückgewonnen werden kann, dass er erneut zur Herstellung von Alkalimetall-Batterien eingesetzt werden kann.

Im Rahmen der vorliegenden Beschreibung wird unter einer Alkalimetall-Batterie eine Batterie verstanden, bei der ein Alkalimetall, insbesondere Natrium oder Lithium, oder eine Verbindung eines Alkalimetalls bei der Abgabe elektrische Energie von einer Elektrode zur anderen wandert. Es ist möglich, nicht aber notwendig, dass sich dabei die Oxidation und/oder die Ladung des Alkalimetalls ändern.

Unter einer Alkalimetall-Batterie wird insbesondere auch ein Alkalimetall-Akkumulator verstanden. Unter einem Akkumulator wird eine wieder aufladbare Batterie verstanden. Unter einer Li-Batterie wird insbesondere auch ein Lithium-Akkumulator verstanden, also eine wiederaufladbare Batterie.

Beispiele für Alkalimetall-Batterien sind Lithium-Ionen-Akkumulatoren wie der Lithium-Cobaltdioxid-Akkumulator, der Lithium-Polymer-Akkumulator, Lithium-Mangan-Akkumulator, der Lithium-Nickel-Cobalt-Mangan-Akkumulator, der Lithium-Eisenphosphat-Akkumulator, der Lithium-Eisen-Yttrium-Phosphat-Akkumulator, der Lithiumtitanat-Akkumulator, der Lithium-Metall-Polymer-Akkumulator sowie Lithium-Akkumulatoren mit metallischem Lithium, zudem der Lithium-Luft-Akkumulator, Lithium-Schwefel-Akkumulator, die Natrium-Nickelchlorid-Hochtemperatur-Batterie, der Natrium-Schwefel-Akkumulator und der Natrium-Ionen-Akkumulator.

Unter dem Zerkleinerungsmaterial wird dasjenige Material verstanden, dass durch Zerkleinern der Alkalimetall-Batterien entstanden ist.

Unter der Schwarzmasse wird insbesondere diejenige graphit- und/oder siliziumhaltige Fraktion des Zerkleinerungsmaterials verstanden. Insbesondere enthält Schwarzmasse zumindest 30 Gewichtsprozent, insbesondere zumindest 40 Gewichtsprozent, an Graphit. Die Schwarzmasse umfasst vorzugsweise zumindest 10 Gewichtsprozent an Übergangsmetallen und/oder deren Verbindungen. Beispielsweise enthält die Schwarzmasse zumindest 5 Gewichtsprozent Nickel und/oder 3 Gewichtsprozent Cobalt. Diese Gewichtsangabe bezieht sich auf das Gewicht des Nickels bzw. des Cobalts und entspricht dem Anteil in Gewichtsprozent, der erhalten würde, wenn alle Nickel-bzw. Cobalt-Atome elementar, also nicht in Verbindungen, vorliegen würden.

Unter dem Waschen des Zerkleinerungsmaterials wird verstanden, dass entweder das Zerkleinerungsmaterial direkt oder aber eine Fraktion des Zerkleinerungsmaterials, insbesondere die Schwarzmasse, so mit dem Wasch-Lösungsmittel in Kontakt gebracht wird, dass das Leitsalz zumindest teilweise vom Wasch-Lösungsmittel gelöst wird. Durch das Lösen des Leitsalzes entsteht aus dem Wasch-Lösungsmittel die Wasch-Flüssigkeit.

Unter dem Regenerieren des Wasch-Lösungsmittels aus der Wasch-Flüssigkeit wird insbesondere verstanden, dass die Wasch-Flüssigkeit so behandelt wird, dass erneut Wasch-Lösungsmittel erhalten wird. Insbesondere umfasst das Regenerieren ein Abscheiden von Leitsalz aus dem Wasch-Lösungsmittels.

Alternativ oder zusätzlich kann das Regenerieren beispielsweise ein Abtrennen des Leitsalzes durch Temperaturerniedrigung umfassen.

Unter dem Merkmal des Waschens des Zerkleinerungsmaterials mit zumindest einem Teil des regenerierten Wasch-Lösungsmittels wird verstanden, dass das regenerierte Wasch-Lösungsmittel zumindest teilweise erneut mit dem Zerkleinerungsmaterial zum Auswaschen des Leitsalzes in Verbindung gebracht wird. In anderen Worten wird das Wasch-Lösungsmittel zumindest teilweise im Kreis geführt.

Vorzugsweise erfolgt das Waschen des Zerkleinerungsmaterials mit dem Wasch-Lösungsmittel bei einer Temperatur von höchstens 80°C, insbesondere höchstens 70°C, bevorzugt höchstens 60°C, besonders bevorzugt höchstens 55°C, insbesondere bevorzugt höchstens 50°C insbesondere bevorzugt höchstens 45°C, insbesondere höchstens 40°C. Niedrige Temperaturen verlangsamen zwar das Auswaschen des Leitsalzes, reduzieren aber die Zersetzung des Leitsalzes und/oder die Bildung von Fluorwasserstoff stark.

Der Elektrolyt enthält ein Leitsalz-Lösungsmittel zum Lösen des Leitsalzes. Das Leitsalz-Lösungsmittel kann ein Reinstoff sein. Alternativ ist das Leitsalz-Lösungsmittel ein Gemisch aus zumindest zwei Reinstoffen. Der Elektrolyt enthält zudem das Leitsalz.

Vorzugsweise enthält das Leitsalz-Lösungsmittel Kohlensäureethylmethylester, also Ethylmethylcarbonat (EMC), und/oder Kohlensäuredimethylester, also Dimethylcarbonat (DMC).

Wird - wie gemäß einer bevorzugten Ausführungsform vorgesehen - das Zerkleinerungsmaterial im Chargenbetrieb gewaschen, so wird das Zerkleinerungsmaterial vorzugsweise zumindest zweimal, insbesondere zumindest dreimal, vorzugsweise zumindest viermal, insbesondere zumindest fünfmal, mit jeweils neuem Wasch-Lösungsmittel gewaschen. Vorzugsweise wird höchstens eintausend Mal gewaschen. Es hat sich herausgestellt, dass zumindest einmaliges Waschen häufig zu unbefriedigenden Reinheiten des wiedergewonnenen Graphits und/oder Leitsalzes führt.

Wird - wie gemäß einer alternativ bevorzugten Ausführungsform vorgesehen - das Zerkleinerungsmaterial kontinuierlich oder semi-kontinuierlich gewaschen, so wird das Wasch-Lösungsmittel vorzugsweise so zugeführt, dass am Ende des Waschens eine Konzentration an Leitsalz im Wasch-Lösungsmittel so groß ist wie sie es wäre, wenn das Zerkleinerungsmaterial zumindest zweimal, insbesondere zumindest dreimal, vorzugsweise zumindest viermal, insbesondere zumindest fünfmal, mit jeweils neuem Wasch-Lösungsmittel im Chargenbetrieb gewaschen worden wäre.

Gemäß einer bevorzugten Ausführungsform umfasst das Verfahren den Schritt des Abtrennens der Schwarzmasse von einer Restfraktion, insbesondere durch Sichten, und des Waschens der so erhaltenen Schwarzmasse mit dem Wasch-Lösungsmittel. Alternativ oder zusätzlich kann das Abtrennen der Schwarzmasse auch ein Schaumflotieren erfassen. Wiederum Alternativ oder zusätzlich kann das Abtrennen ein Herstellen einer Suspension und ein Zentrifugieren der Suspension umfassen.

Vorzugsweise wird das Abtrennen der Schwarzmasse von der Restfraktion so durchgeführt, dass ein Kunststoff-Gewichtsanteil an Kunststoffpartikeln in der Schwarzmasse höchstens ein Fünftel des Kunststoff-Gewichtsanteils in der Restfraktion beträgt. Dadurch kommt bei dem Waschen des Zerkleinerungsmaterials, insbesondere der Schwarzmasse, das Wasch-Lösungsmittel nicht oder kaum in Kontakt mit Plastik oder Papier.

Die Trennung des Zerkleinerungsmaterials, insbesondere der Schwarzmasse, vom Wasch-Lösungsmittel erfolgt beispielsweise durch Filtern.

Erfindungsgemäß ist daher auch ein Verfahren mit den Schritten (i) Zerkleinern der Alkalimetall-Batterien, sodass Zerkleinerungsmaterial entsteht, das Schwarzmasse, Aktivmaterial und Binder enthält, (ii) danach Abtrennen der Schwarzmasse, insbesondere durch Sichten aus dem Zerkleinerungsmaterial, (iii) Waschen der Schwarzmasse des Zerkleinerungsmaterials mit dem Wasch-Lösungsmittel, sodass Leitsalz ausgewaschen wird und der Binder nicht ausgewaschen wird, sodass leitsalzarme Schwarzmasse und eine Wasch-Flüssigkeit erhalten werden, (iv) Regenerieren des Wasch-Lösungsmittels aus der Wasch-Flüssigkeit, insbesondere durch Destillieren, und (v) Waschen der Schwarzmasse mit zumindest einem Teils des regenerierten Wasch-Lösungsmittels. Auf diese Weise kann das Leitsalz in der Regel mit besonders hoher Reinheit zurückgewonnen werden. Die in dieser Beschreibung genannten bevorzugten Ausführungsformen gelten auch für diese Erfindung.

Vorzugsweise ist das Wasch-Lösungsmittel ein Bestandteil des Elektrolyten. Bevorzugt besteht das Wasch-Lösungsmittel zu zumindest 50 Gewichtsprozent, vorzugsweise zu zumindest 70 Gewichtsprozent, besonders bevorzugt zu zumindest 85 Gewichtsprozent, insbesondere bevorzugt zu zumindest 95 Gewichtsprozent, besonders bevorzugt zu zumindest 98 Gewichtsprozent, aus einer Verbindung oder Verbindungen, die Bestandteil des Elektrolyten sind.

Günstig ist es, wenn zum Wasch-Lösungsmittel zumindest im Wesentlichen keinen Verdünner enthält. Hierunter ist insbesondere zu verstehen, dass höchstens 20 Gewichtsprozent, insbesondere höchstens 15 Gewichtsprozent, besonders bevorzugt höchstens 10 Gewichtsprozent, vorzugsweise höchstens 5 Gewichtsprozent des Wasch-Lösungsmittels, aus Substanzen besteht, die nicht zugleich im Elektrolyten der Alkalimetall-Batterien enthalten sind.

Günstig ist es, wenn das Wasch-Lösungsmittel im Wesentlichen nicht in Kontakt mit Wasser gebracht wird. Unter dem Merkmal, dass das Wasch-Lösungsmittel im Wesentlichen nicht mit Wasser in Kontakt gebracht wird, wird insbesondere verstanden, dass ein Kontakt mit Wasser, der zu einem Reagieren von zumindest 5 Mol-%, insbesondere mehr als 1 Mol-%, besonders bevorzugt mehr als 0,1 Mol-%, des Leitsalzes führt, nicht stattfindet. Insbesondere wird dem Wasch-Lösungsmittel kein Wasser zugegeben.

Günstig ist es, wenn das Wasch-Lösungsmittel zumindest zwei unterschiedliche Lösungsmittel enthält. Das so ist eine erhöhte Löslichkeit des Leitsalzes erreichbar.

Vorzugsweise enthält das Wasch-Lösungsmittel zumindest 5 Gewichtsprozent, insbesondere zumindest 10 Gewichtsprozent, besonders bevorzugt zumindest 15 Gewichtsprozent, insbesondere zumindest 20 Gewichtsprozent, insbesondere bevorzugt zumindest 25 Gewichtsprozent, eines ersten Reinstoff (erster Waschlösungsmittel-Reinstoff) und zumindest 5 Gewichtsprozent, insbesondere zumindest 10 Gewichtsprozent, besonders bevorzugt zumindest 15 Gewichtsprozent, insbesondere zumindest 20 Gewichtsprozent, insbesondere bevorzugt zumindest 25 Gewichtsprozent, eines zweiten Reinstoff (zweiter Waschlösungsmittel-Reinstoff). Der erste Reinstoff ist vorzugsweise Ethylmethylcarbonat. Der zweite Reinstoff ist vorzugsweise Dimethylcarbonat.

Vorzugsweise weicht eine Waschlösungsmittel-Hauptkomponenten-Konzentration der Haupt-Komponente des Wasch-Lösungsmittels (gemessen in Gewichtsprozent) um höchstens Faktor 10, insbesondere höchstens Faktor 9, insbesondere höchstens Faktor 8, insbesondere höchstens Faktor 7, insbesondere höchstens Faktor 6, insbesondere höchstens Faktor 5, insbesondere höchstens Faktor 4, insbesondere höchstens Faktor 3, insbesondere höchstens Faktor 2, von einer Leitsalzlösungsmittel-Hauptkomponenten-Konzentration der Haupt-Komponente des Leitsalz-Lösungsmittels ab.

Der Faktor wird berechnet, in dem aus der Menge, die die Konzentration der Haupt-Komponente des Wasch-Lösungsmittels und die Konzentration der Haupt-Komponente des Leitsalz-Lösungsmittels enthält, das Maximum bestimmt wird. Der Faktor ist der Quotient dieses Maximums (als Zähler) und des Minimums der genannten Menge (als Nenner). Die Haupt-Komponente ist diejenige Reinsubstanz, die in Gewichtsprozent den größten Anteil am Wasch-Lösungsmittel bzw. am Leitsalz-Lösungsmittel hat.

Das Leitsalz-Lösungsmittel ist darauf optimiert, das Leitsalz möglichst gut zu lösen. Das Wasch-Lösungsmittel vermag daher das Leitsalz in der Regel besonders gut zu lösen, wenn es in seiner Haupt-Komponente möglichst gut mit der Haupt-Komponente des Leitsalz-Lösungsmittels übereinstimmt.

Vorzugsweise weicht eine Konzentration der Nebenhaupt-Komponente des Wasch-Lösungsmittels (gemessen in Gewichtsprozent) um höchstens Faktor 10, insbesondere höchstens Faktor 9, insbesondere höchstens Faktor 8, insbesondere höchstens Faktor 7, insbesondere höchstens Faktor 6, insbesondere höchstens Faktor 5, insbesondere höchstens Faktor 4, insbesondere höchstens Faktor 3, insbesondere höchstens Faktor 2, von eine Konzentration der Nebenhaupt-Komponente des Leitsalz-Lösungsmittels ab. Die Nebenhaupt-Komponente ist diejenige Reinsubstanz, die in Gewichtsprozent den zweitgrößten Anteil am Wasch-Lösungsmittels bzw. am Leitsalz-Lösungsmittel hat. Dadurch verbessert sich die Löslichkeit des Leitsalzes im Wasch-Lösungsmittel weiter.

Vorzugsweise ist das Wasch-Lösungsmittel so gewählt, dass es beim Waschen zu nicht mit dem Leitsalz reagiert.

Vorzugsweise ist das Wasch-Lösungsmittel so gewählt, dass es beim Waschen keine Verbindung mit Lithium bildet.

Vorzugsweise wird beim Waschen des Zerkleinerungsmaterials, insbesondere der Schwarzmasse, das Zerkleinerungsmaterial, insbesondere die Schwarzmasse, bewegt, beispielsweise gerührt oder in einer drehbaren Trommel gedreht.

Das Waschen kann kontinuierlich, diskontinuierlich (also im Chargenbetrieb) oder semi-kontinuierlich durchgeführt werden.

Das Waschen des Zerkleinerungsmaterials, insbesondere der Schwarzmasse, wird vorzugsweise so lange durchgeführt, bis zumindest 70 Gewichtsprozent, insbesondere zumindest 75 Gewichtsprozent, insbesondere zumindest 80 Gewichtsprozent, insbesondere zumindest 85 Gewichtsprozent, insbesondere zumindest 90 Gewichtsprozent, insbesondere zumindest 95 Gewichtsprozent, des Leitsalzes entfernt ist.

Das kann beispielsweise dadurch ermittelt werden, dass in regelmäßigen Abständen Proben des Zerkleinerungsmaterials insbesondere Schwarzmasse, entnommen werden und der Gehalt an Leitsalz bestimmt wird. Das kann beispielsweise mittels Kernspinresonanz (NMR)-Messung erfolgen.

Alternativ wird die Konzentration an Leitsalz in der Wasch-Flüssigkeit kontinuierlich überwacht, beispielsweise ebenfalls mittels (NMR)-Messung. Diese Konzentration folgt einer Extraktionskurve, in der die Konzentration an Leitsalz über der Gesamtmenge an verwendetem Wasch-Lösungsmittel aufgetragen ist. Die Extraktionskurve ist streng monoton fallend. Die gemessenen Messwerte werden mit einer parametrisierten Modellfunktion angepasst (curve fitting), wobei die Parameter der Modellfunktion so gewählt sind, dass aus diesen die ursprüngliche Konzentration bestimmt werden kann. Aus dieser Modellfunktion wird die Konzentration berechnet, bei der der vorgegebene Anteil an Leitsalz entfernt ist. Wird ein Messwert gemessen, der kleiner ist als diese Konzentration, wird das Waschen beendet.

Wiederum alternativ kann in Vorversuchen ermittelt werden, wie oft und/oder wie lange Wasch-Lösungsmittel zugeführt und abgeführt werden muss, um den vorgegebenen Anteil an Leitsalz zu entfernen.

Gemäß einer bevorzugten Ausführungsform umfasst das Regenerieren des Wasch-Lösungsmittels ein Destillieren, insbesondere ein Vakuum-Destillieren der Wasch-Flüssigkeit.

Das Vakuum-Destillieren erfolgt bei einer Regenerier-Temperatur. Die Regenerier-Temperatur beträgt vorzugsweise höchstens 100°C, insbesondere höchstens 80°C, insbesondere höchstens 70°C insbesondere höchstens 60°C insbesondere höchstens 55°C insbesondere höchstens 52°C insbesondere höchstens 50°C, insbesondere höchstens 48°C insbesondere höchstens 45°C.

Die Regenerier-Temperatur ist die höchste Temperatur, die im Vakuum-Destillator an einer Stelle herrscht, die mit Leitsalz (gelöst oder ungelöst) in Kontakt kommt.

Das Vakuum-Destillieren erfolgt vorzugsweise bei einem Druck, der unterhalb des Dampfdrucks des Wasch-Lösungsmittels bei der Regenerier-Temperatur liegt.

Gemäß einer bevorzugten Ausführungsform ist der Destillier-Druck p₄₂ so gewählt, dass sowohl Ethylmethylcarbonat (EMC, Kohlensäureethylmethylester) als auch Dimethylcarbonat (DMC, Kohlensäuredimethylester) verdampfen.

Vorzugsweise ist der Destillier-Druck p₄₂ so gewählt, dass keine Substanzen verdampfen, deren Siedepunkt bei Normaldruck (1013 hPa) oberhalb eines Trenn-Siedepunkts Ttrenn liegen. Die Substanzen mit einem Siedepunkt mit einem Siedepunkt, der höchstens dem Trenn-Siedepunkts Ttrenn entspricht, werden Leichtsieder genannt.

Je höher der Trenn-Siedepunkt Ttrenn, desto mehr Komponenten des Elektrolyten der Alkalimetall-Batterien sind Teil des Wasch-Lösungsmittels. Vorzugsweise wird der Trenn-Siedepunkt Ttrenn, so gewählt, dass höchstens fünf Komponenten, insbesondere höchstens vier Komponenten, vorzugsweise höchstens drei Komponenten, besonders bevorzugt höchstens zwei Komponenten, des Elektrolyten verdampfen.

Vorzugsweise wird der Trenn-Siedepunkt Ttrenn, so gewählt, dass mindestens eine Komponente, insbesondere mindestens zwei Komponenten, vorzugsweise mindestens drei Komponenten, besonders bevorzugt mindestens vier Komponenten, des Elektrolyten verdampfen.

Eine Komponente des Elektrolyten ist eine Reinsubstanz, deren Anteil am Elektrolyten der Alkalimetall-Batterien zumindest 0,5 Mol-% beträgt.

Vorzugsweise gilt Ttrenn > 108°C, beispielsweise Ttrenn = 110°C.

Vorzugsweise umfasst das Verfahren den Schritt des Abtrennens des Leitsalzes von der Wasch-Flüssigkeit. Beim Regenerieren des Wasch-Lösungsmittels entsteht ein Abtrennen-Rückstand. Ist das Regenerieren ein Vakuum-Destillieren, so entsteht ein Destillationssumpf. Vorzugsweise wird das Leitsalz aus dem Abtrenn-Rückstand, insbesondere dem Destillationssumpf, abgetrennt. Beispielsweise wird das Leitsalz durch Auskristallisieren abgetrennt.

Günstig ist es, wenn das abgetrennte Leitsalz zur Herstellung neuer Alkalimetall-Batterien verwendet wird.

Vorzugsweise besteht das Wasch-Lösungsmittel zu zumindest 50 Gewichtsprozent aus einer Verbindung oder Verbindungen, die Bestandteil des Elektrolyten sind. Günstig ist es, wenn das Verfahren den Schritt des Abziehens von Wasch-Lösungsmittel aus einem Waschlösungsmittelkreislauf, in dem das Wasch-Lösungsmittel geführt wird, umfasst.

Günstig ist es, wenn das abgezogene Wasch-Lösungsmittel zur Herstellung neuer Alkalimetall-Batterien verwendet wird.

Gemäß einer bevorzugten Ausführungsform umfasst das Verfahren den Schritt Mahlen des leitsalzarmen Zerkleinerungsmaterials. Das kann beispielsweise mit einer Turbomühle, einer Prallmühle oder einer Kugelmühle erfolgen. Vorzugsweise entält das leitsalzarme Zerkleinerungsmaterial noch Folienbestandteile, insbesondere Metallfolienbestandteile. Vorzugsweise enthält das leitsalzarme Zerkleinerungsmaterial zumindest ein Drittel des Anteils in Gewichtsprozent an Metallfolienbestandteilen im Zerkleinerungsmaterial unmittelbar nach dem Zerkleinern, insbesondere sind noch alle Metallfolienbestandteile enthalten.

Nach dem Mahlen erfolgt vorzugsweise ein Aussieben der Schwarzmasse. Die Schwarzmasse stellt die Fraktion mit der kleinsten Korngröße dar. Aus der verbleibenden Fraktion werden vorzugsweise vor dem Bestandteile, insbesondere Kupfer- und/oder Aluminium-Folienteile abgetrennt. Das erfolgt beispielsweise mittels eines Fließbett-Separators oder eines Sichters. Aus der so gewonnenen Schwarzmasse wird, wie im Folgenden beschriebenen wird, vorzugsweise der Binder mittels eines Binder-Lösungsmittels herausgelöst.

Gemäß einer bevorzugten Ausführungsform weist das Verfahren den Schritt des Entfernens, insbesondere Herauslösens, des Binders aus dem leitsalzarmen Zerkleinerungsmaterial, insbesondere der leitsalzarmen Schwarzmasse, mit einem Binder-Lösungsmittel, sodass binderarmes Zerkleinerungsmaterial, insbesondere binderarme Schwarzmasse, erhalten wird. Das Binder-Lösungsmittel ist insbesondere nicht das Wasch-Lösungsmittel. Um das Aktivmaterial, insbesondere den Graphit, erneut zur Herstellung von Alkalimetall-Batterien verwenden zu können, muss dieser eine hohe Reinheit besitzen. Es hat sich herausgestellt, dass diese Reinheit leichter zu erreichen ist, wenn der Binder herausgelöst wird.

Ein vollständiges Entfernen des Binders ist zwar theoretisch wünschenswert, aber praktisch nicht vollständig. Vorzugsweise werden zumindest 50 Gewichtsprozent, insbesondere zumindest 60 Gewichtsprozent, insbesondere zumindest 70 Gewichtsprozent, insbesondere zumindest 80 Gewichtsprozent, insbesondere zumindest 90 Gewichtsprozent, des Binders entfernt. Vorzugsweise werden höchstens 99 Gewichtsprozent des Binders entfernt.

Alternativ oder zusätzlich weist das Verfahren vorzugsweise den Schritt des Herauslösens eines Festkörper-Elektrolyten aus dem leitsalzarmen Zerkleinerungsmaterial, insbesondere der leitsalzarmen Schwarzmasse, mit einem Lösungsmittel, sodass festkörperelektrolytarmes Zerkleinerungsmaterial, insbesondere festkörperelektrolytarme Schwarzmasse, erhalten wird, auf.

Bei dem Binder-Lösungsmittel handelt es sich vorzugsweise um Azeton, γ-Butyrolacton (GBL), Diethylcarbonat (DEC), Dimethylacetamid (DMA), N,N-Dimethylformamid (DMF), Dimethylsulfoxid (DMSO), 3-Heptanon, 3-Hexanon, Methylethylketon (MEK), Methylethylketon (MEK), Octansäuremethylester, superkritisches Kohlendioxid oder um eine Mischung aus zwei, drei, vier oder mehr der genannten chemischen Verbindungen.

Vorzugsweise erfolgt das Herauslösen des Binders unter Verwendung zumindest eines Verdünnungsmittels. Vorzugsweise ist das Verdünnungsmittel γ-Butyrolacton (GBL), Dimethylsulfoxid (DMSO), 3-Heptanon oder 3-Octanon.

Das Herauslösen des Binders und/oder des Festkörper-Elektrolyten erfolgt vorzugsweise bei zumindest 70°C, insbesondere zumindest 90°C, insbesondere zumindest 110°C, insbesondere zumindest 130°C, insbesondere zumindest 150°C, insbesondere zumindest 175°C, insbesondere zumindest 200°C, insbesondere zumindest 240°C, insbesondere zumindest 260°C, insbesondere zumindest 280°C, insbesondere zumindest 290°C.

Vorzugsweise ist diese Temperatur kleiner als die Siedetemperatur des Binder-Lösungsmittels beim verwendeten Druck.

Günstig ist es, wenn das Herauslösen des Binders bei einer Temperatur erfolgt, die höchstens 30 Kelvin, insbesondere höchstens 20 Kelvin, vorzugweise höchstens 10 Kelvin, unterhalb der Siedetemperatur des Binder-Lösungsmittels beim jeweiligen Prozessdruck liegt.

Vorzugsweise erfolgt das Herauslösen des Binders unter Überdruck, beispielsweise bei zumindest 100 hPa Überdruck, insbesondere zumindest 200 hPa Überdruck zumindest 500 hPa Überdruck zumindest 1000 hPa Überdruck zumindest 2000 hPa Überdruck zumindest 3000 hPa Überdruck. Vorzugweise beträgt der Überdruck höchstens 10 MPa. Dieser Überdruck ist der Prozessdruck

Vor dem Herauslösen des Binders wird das leitsalzarme Zerkleinerungsmaterial, insbesondere die leitsalzarme Schwarzmasse, vorzugsweise nicht pyrometallurgisch oxidiert und/oder nicht auf eine Temperatur von mehr als 300°C, insbesondere nicht auf mehr als 250°C, erhitzt.

Vor dem Herauslösen des Binders wird das leitsalzarme Zerkleinerungsmaterial, insbesondere die leitsalzarme Schwarzmasse, vorzugsweise nicht in einer wasserstoffhaltigen Atmosphäre erhitzt.

Das Wasch-Lösungsmittel enthält vorzugsweise höchstens 5 Gewichtsprozent, bevorzugt höchstens 3 Gewichtsprozent, besonders bevorzugt höchstens 1 Gewichtsprozent, insbesondere im Wesentlichen kein Erdalkalimetallhydroxid. Unter dem Merkmal, dass im Wesentlichen kein Erdalkalimetallhydroxid vorhanden ist, wird insbesondere verstanden, dass eine etwaig vorhandene Menge an Erdalkalimetallhydroxid vernachlässigt werden kann.

Vorzugsweise ist das Wasch-Lösungsmittel so gewählt, dass beim Waschen höchstens 20 Mol-%, höchstens höchstens 10 Mol-% , besonders bevorzugt höchstens 5 Mol-%, insbesondere bevorzugt höchstens 1 Mol-%, des Lithiums beim Waschen zu Lithiumhydroxid reagiert. Vorzugsweise ist das Wasch-Lösungsmittel so gewählt, dass sich beim Waschen kein Lithiumhydroxid bildet.

Vor dem Herauslösen des Binders ist das leitsalzarme Zerkleinerungsmaterial, insbesondere die leitsalzarme Schwarzmasse, unaufgeschlossen, das heißt nicht mit einer Mineralsäure behandelt worden.

Gemäß einer bevorzugten Ausführungsform umfasst das Verfahren den Schritt eines Trennens, insbesondere eines Sichtens, des binderarmen Zerkleinerungsmaterials, insbesondere der binderarmen Schwarzmasse, sodass eine Graphitfraktion und eine Übergangsmetall-Fraktion, in der zumindest ein Übergangsmetall gegenüber der Graphitfraktion angereichert ist, erhalten wird.

Unter einem Übergangsmetall werden die Elemente verstanden, die eine unvollständige d-Unterschale besitzen oder Ionen mit einer unvollständigen d-Unterschale ausbilden. Insbesondere sind in der Übergangsmetall-Fraktion Cobalt und/oder Nickel gegenüber der Graphitfraktion angereichert, vorzugsweise um zumindest den Anreicherungsfaktor 3 (was bedeutet, dass die Konzentration an dem entsprechenden Übergangsmetall in der Übergangsmetall-Fraktion zumindest dreifach größer ist als die Konzentration an dem entsprechenden Übergangsmetall in der Graphitfraktion), insbesondere den Anreicherungsfaktor 4, insbesondere den Anreicherungsfaktor 5, vorzugsweise den Anreicherungsfaktor 6.

Es hat sich herausgestellt, dass ein hoher Anreicherungsfaktor dann besonders gut erreichbar ist, wenn möglichst viel Binder entfernt wird. Der genaue Grund ist nicht vollständig bekannt. Es wird angenommen, dass der Binder einzelne Graphitpartikel miteinander und mit Partikeln, die Übergangsmetall oder ein Salz des Übergangsmetalls enthalten, verklebt, sodass ein Trennen, möglich ist.

Das Trennen kann auch eine Flotation, insbesondere eine Schaumflotation, sein oder umfassen. Es hat sich jedoch herausgestellt, dass sich durch Sichten ein höherer Anreicherungsfaktor erreichen lässt.

Vorzugsweise ist das Sichten ein Feinsichten. Günstig ist es, wenn das Sichten mittels eines Feinsichters erfolgt, der ein Sichtrad aufweist. Das Sichtrad kann auch als Klassierrad bezeichnet werden. Das Sichtrad besitzt Ausnehmungen, insbesondere Schlitze. Die Ausnehmungen haben vorzugsweise eine lichte Weite, insbesondere eine Schlitzbreite, die mindestens 0,1 mm, insbesondere 1 mm beträgt und/oder höchstens 25 mm, insbesondere höchstens 15 mm, besonders bevorzugt höchstens 10 mm, beträgt.

Vorzugsweise ist der Feinsichter ausgebildet zum Drehen des Sichtrads mit einer Sichtrad-Drehfrequenz zwischen 500 und 20000 Umdrehungen pro Sekunde. Je höher die Sichtrad-Drehfrequenz, desto kleiner ist der aerodynamische Durchmesser der entfernten Fraktion.

Vorzugsweise sind die Ausnehmungen und die Drehfrequenz so gewählt, dass die Graphitfraktion eine Graphitfraktion-Partikelgrößenverteilung, wobei 80 Volumenprozent des Graphits eine Partikelgröße von weniger als 20 µm haben.

Alternativ oder zusätzlich sind die Ausnehmungen und die Drehfrequenz so gewählt, dass die Übergangsmetall-Fraktion eine Übergangsmetallfraktion-Partikelgrößenverteilung hat, wobei 90% der Partikel eine Partikelgröße von unter 35 µm, insbesondere unter 30 µm. Vorzugsweise haben zumindest 50% der Partikel eine Partikelgröße von unter 25 µm, insbesondere unter 20 µm. Es hat sich herausgestellt, dass auf diese Weise ein besonders hoher Anreicherungsfaktor erreichen lässt. Die Partikelgröße wird nach DIN ISO 13320:2009 bestimmt.

Gemäß einer bevorzugten Ausführungsform umfasst das Verfahren den Schritt: nach dem Waschen des Zerkleinerungsmaterials, insbesondere der Schwarzmasse, mit dem Wasch-Lösungsmittel Trocknen des leitsalzarmen Zerkleinerungsmaterial, insbesondere der leitsalzarmen Schwarzmasse.

Vorzugsweise umfasst das Verfahren den Schritt: nach dem Trocknen Waschen des leitsalzarmen Zerkleinerungsmaterial, insbesondere der leitsalzarmen Schwarzmasse, mit einem zweiten Lösungsmittel, dessen Siedepunkt tiefer liegt als der Siedepunkt des Wasch-Lösungsmittels. Enthält das Wasch-Lösungsmittel zwei oder mehr Komponenten, hat das zweite Lösungsmittel vorzugsweise einen kleineren Siedepunkt als alle Komponenten des wasch-Lösungsmittels. Vorzugweise wird die das so behandelte Zerkleinerungsmaterial, insbesondere die so behandelte Schwarzmasse, danach erneut getrocknet.

Nach dem Trocknen erfolgt vorzugsweise ein Abtrennen von Folienbestandteilen, insbesondere Kunststoff- und/oder Metallfolienbestandteilen. Das erfolgt insbesondere vor einem Herauslösen des Binders. Vorzugsweise wird das Abtrennen so durchgeführt, dass ein Folien-Gewichtsanteil an Folienbestandteilen nach dem Abtrennen höchstens ein Fünftel des Folien-Gewichtsanteils vor dem Abtrennen beträgt. Dadurch kommt bei dem Herauslösen des Binders das Binder-Lösungsmittel nicht oder kaum in Kontakt mit Plastik oder Metallfolien.

Vorzugsweise wird das binderarme Zerkleinerungsmaterial, insbesondere die binderarme Schwarzmasse, vor dem Herauslösen des Binders getrocknet. Das Trocknen erfolgt vorzugsweise bei einem Druck von höchstens 300 hPa, insbesondere höchstens 10 hPa. Auf diese Weise wird das Binder-Lösungsmittel weniger verunreinigt.

Günstig ist es, wenn der Graphit der Graphitfraktion zur Herstellung neuer Alkalimetall-Batterien verwendet wird.

Günstig ist es, wenn das Verfahren den folgenden Schritt aufweist: vor dem Waschen des Zerkleinerungsmaterials Abtrennen von Folienteilen vom Zerkleinerungsmaterial das so erhaltene Zerkleinerungsmaterial, dass auch als folienarmes Zerkleinerungsmaterial lässt sich gut mit dem Wasch-Lösungsmittel waschen. Bei den Folien kann es sich um Kunststofffolien und/oder Metallfolien handeln. Beispielsweise handelt es sich um Teile der Separatorfolie und/oder von Aluminium-Folie und/oder Kupfer-Folie.

Gemäß einer bevorzugten Ausführungsform enthält das Verfahren den folgenden Schritt: nach dem Zerkleinern, vorzugsweise nach dem Abtrennen von Folienteilen, und vor dem Waschen des Zerkleinerungsmaterials Vor-Trocknen des Zerkleinerungsmaterials. Das Vor-Trocknen wird vorzugsweise so durchgeführt, dass zumindest 50 Gewichtsprozent des Elektrolyten entfernt werden.

Vorzugsweise erfolgt das Vor-Trocknen bei einem Druck von höchstens 300 hPa und/oder einer Temperatur von höchstens 70°C, insbesondere höchstens 60°C, insbesondere höchstens 50°C. Vorzugsweise wird das Vor-Trocknen bei einer so niedrigen Temperatur durchgeführt, dass höchstens 5 Mol-Prozent, insbesondere höchstens ein Mol-%, des Fluors im Zerkleinerungsmaterial zu Fluorwasserstoff reagiert.

Ausführungsform umfasst das Verfahren den Schritt: vor dem Zerkleinern Kurzschließen der Batterien bis zumindest 75% der galvanischen Elemente eine Regenerations-Zellspannung von höchstens 0,4 Volt, insbesondere höchstens 0,3 V, vorzugsweise höchstens 0,2 Volt, insbesondere höchstens 0,15 Volt, besonders bevorzugt höchstens 0,1 Volt, insbesondere höchstens 0,05 V, haben.

Ein Kurzschließen der Batterien führt dazu, dass das Leitsalz mit besonders hoher Reinheit zurückgewonnen werden kann. Warum das Kurzschließen die Reinheit des zurückgewonnenen Leitsalzes erhöht, ist nicht vollständig geklärt. Vermutlich bewirkt eine Regenerations-Zellspannung, die deutlich oberhalb von 0 V liegt, dass es beim Zerkleinern lokal zu Wärmeentwicklung kommt, die die Zersetzung von Leitsalz und/oder die Entstehung von Fluorwasserstoff fördern kann.

Es sei darauf hingewiesen, dass ein Tiefentladen allein nicht zu einer Regenerations-Zellspannung von höchstens 0,2 V führt. Unter Tiefentladen versteht man eine Stromentnahme aus der Batterie bis zur nahezu vollständigen Erschöpfung der Kapazität, insbesondere bis unter die Entladeschlussspannung. Die Entladeschlussspannung kann beispielsweise 0,1 Volt betragen. Der Energieinhalt der Batterien ist nach dem Tiefentladen sehr klein, da einerseits die Zellspannung stark abgefallen ist und andererseits der erreichbare Entladestrom sehr klein ist. Bei Verfahren nach dem Stand der Technik wird daher lediglich tiefentladen.

Es hat sich jedoch herausgestellt, dass der Energieinhalt auch nach einem Tiefentladen hinreichend hoch ist, um zum Entstehen von Fluorwasserstoff führen zu können. Die Mengen an Fluorwasserstoff, die beim Zerkleinern von tiefentladenen, nicht aber kurzgeschlossenen Batterien entstehen, sind zwar vergleichsweise klein, es hat sich jedoch herausgestellt, dass auch kleine Verunreinigungen des Leitsalzes mit Zersetzungsprodukten die Eignung des Leitsalzes und/oder des Elektrolyten zum Herstellen neuer Batterien beeinträchtigen kann.

Unter der Regenerations-Zellspannung wird diejenige Zellspannung verstanden, die nach einer vorgegebenen Regenerationszeit, während der die Pole der Batterien elektrisch unverbunden sind, am jeweiligen galvanischen Element anliegt. Unter dem Merkmal, dass die Pole der Batterien elektrisch unverbunden sind, wird verstanden, dass die Pole gegeneinander isoliert sind, also insbesondere ein Widerstand von zumindest 1 Megaohm zwischen beiden Polen besteht. In anderen Worten wird während der Regenerationszeit keine elektrische Energie aus dem galvanischen Element entnommen. Insbesondere sind während der Regenerationszeit die Pole der galvanischen Elemente der Batterie elektrisch unverbunden.

Während der Regenerationszeit steigt die Zellspannung an. Selbst ein Entladen einer Batterie auf eine Zell-Endspannung von beispielsweise unterhalb 0,2 V, beispielsweise auf 0 V, führt zu einer Regenerations-Zellspannung von mehr als der Zell-Endspannung.

Es wurde ermittelt, dass eine Batterie INR18650-25R von Samsung, Bauzeitpunkt Februar 2022 nach einem Kurzschließen für 1 Stunde eine Zellspannung von 0 V hat. Die Regenerations-Zellspannung betrug 1 V. Nach einem Kurzschließen für 3 Stunden betrug die Regenerations-Zellspannung 0,8 V. Nach einem Kurzschließen für 5 Stunden betrug Regenerations-Zellspannung 0,6 V. Nach einem Kurzschließen für 24 Stunden betrug die Regenerations-Zellspannung 0,2 V.

Das Kurzschließen der Batterien für eine so lange Kurzschlusszeit, dass die Regenerations-Zellspannung höchstens 0,2V, insbesondere höchstens 0,15 V, insbesondere höchstens 0,1 V, beträgt, kann auch als regenerationssicheres Kurzschließen bezeichnet werden. Günstig ist es also, wenn das Zerkleinern der Batterien erst nach regenerationssicherem Kurzschließen der Batterien durchgeführt wird.

Ob ein regenerationssicheres Kurzschließen stattgefunden hat, kann dadurch ermittelt werden, dass die entsprechende Batterie für die Regenerationszeit ohne externe elektrische Last und insbesondere ohne Kurzschluss bei 1013 hPa und 23°C gelagert wird und danach die Zellspannung gemessen wird. In anderen Worten kann auch dann ein Kurzschließen der Batterien bis zumindest 75% der galvanischen Elemente die angegebene maximale Regenerations-Zellspannung haben, vorliegen, wenn die Batterien vor Ablauf der Regenerationszeit zerkleinert oder anderweitig bearbeitet werden. Maßgeblich ist lediglich, ob sie so kurzgeschlossen wurden, dass sie nach Ablauf der Regenerationszeit die angegebene Regenerations-Zellspannung nicht überschreiten würden.

Die Regenerationszeit beträgt 12 Stunden. Es sei darauf hingewiesen, dass dies keine Aussage darüber ist, wie lange die Batterien kurzgeschlossen werden. Vielmehr ist die Regenerationszeit diejenige Zeit, die die Batterien nach dem Entladen, insbesondere dem Kurzschließen, im nicht-kontaktierten, insbesondere nicht-kurzgeschlossenen, Zustand verweilen. Insbesondere kann ein Kurzschließen der Batterien für 12 Stunden dazu führen, dass die Regenerations-Zellspannung dennoch oberhalb von 0,2 Volt liegt.

Vorzugsweise werden die Batterien für eine Kurzschlusszeit von zumindest 8 Stunden, insbesondere zumindest 10 Stunden, vorzugweise zumindest 12 Stunden, besonders zumindest 15 Stunden, insbesondere zumindest 18 Stunden, kurzgeschlossen. Besonders günstig ist eine Kurzschlusszeit von zumindest 20 Stunden, beispielsweise 24 Stunden. Vorzugsweise ist die Kurzschlusszeit kleiner als 120 Stunden. Auf diese Weise ist erreichbar, dass - wie gemäß einer bevorzugten Ausführungsform vorgesehen - sich mindestens 90 Gewichtsprozent, insbesondere zumindest 95 Gewichtsprozent, des Leitsalzes der Batterien beim Zerkleinern nicht zersetzen.

Vorzugsweise werden die Schritte vor dem Waschen der Schwarzmasse so durchgeführt werden, dass das Leitsalz der Alkalimetall-Batterien sich zu höchstens 10 Gewichtsprozent, insbesondere zu höchstens 5 Gewichtsprozent, insbesondere zu höchstens 3 Gewichtsprozent, insbesondere zu höchstens 1 Gewichtsprozent, insbesondere zu höchstens 0,5 Gewichtsprozent, insbesondere zu höchstens 0,1 Gewichtsprozent, zersetzt.

Günstig ist es, wenn das Kurzschließen mit einem metallischen Leiter erfolgt. Der metallische Leiter verbindet dabei die Pole der Batterien, also Minuspol und Pluspol, lastfrei. Das heißt, dass der metallische Leiter die Pole der Batterie nicht mit einem elektrischen Widerstand oder einem anderen elektrischen Verbraucher verbindet. Günstig ist es insbesondere, wenn das Verbinden von Minuspol und Pluspol nicht mittels einer Flüssigkeit, insbesondere einer Salzlösung, erfolgt.

Vorzugsweise beträgt beim Kurzschließen ein elektrischer Widerstand zwischen dem Pluspol des der Batterie und einem Minuspol der Batterie höchstens 10 Ohm, insbesondere höchstens 1 Ohm, bevorzugt höchstens 0,3 Ohm, besonders bevorzugt höchstens 0,1 Ohm.

Es ist möglich, nicht aber notwendig, dass die Batterie nach dem regenerationssicheren Kurzschließen transportiert wird, insbesondere über eine Strecke von zumindest 1 km, insbesondere zumindest 5 km. Durch das regenerationssichere Kurzschließen ist das Risiko eines Brandes und damit einer Umweltgefährdung durch die Batterie besonders klein. Vorzugsweise wird die Batterie nach dem regenerationssicheren Kurzschließen nicht über eine Strecke von mehr als 1 km transportiert, da auch ein solcher Transport ein Sicherheitsrisiko darstellen kann.

Gemäß einer bevorzugten Ausführungsform wird das Zerkleinerungsmaterial vor dem Waschen im Wesentlichen nicht mit Wasser in Kontakt gebracht. Unter dem Merkmal, dass das Zerkleinerungsmaterial im Wesentlichen nicht mit Wasser in Kontakt gebracht wird, wird insbesondere verstanden, dass ein Kontakt mit Wasser, der zu einem Reagieren von zumindest 5 Mol-%, insbesondere mehr als 1 Mol-%, besonders bevorzugt mehr als 0,1 Mol-%, des Leitsalzes führt, nicht stattfindet. Insbesondere wird das Zerkleinern ohne Einbringen von Wasser durchgeführt, insbesondere nicht durch Wasserstrahlschneiden.

Vorzugsweise enthält das Zerkleinerungsmaterial zumindest im Wesentlichen keine organischen Kationen. Hierunter wird insbesondere verstanden, dass ein Gehalt an Substanzen mit organischen Kationen höchstens 0,1 Gewichtsprozent beträgt. Besonders bevorzugt enthält das Zerkleinerungsmaterial keine organischen Kationen und/oder keine Doppelschichtkondensatoren.

Bevorzugt wird vor und während des Zerkleinerns das Aktivmaterial und/oder der Elektrolyt, im Wesentlichen nicht mit Wasser in Kontakt gebracht. Hierunter wird insbesondere verstanden, dass kein Kontakt mit Wasser stattfindet, der zu einem Reagieren von mehr als 5 mol-%, insbesondere mehr als 1 Mol-%, insbesondere mehr als 0,1 Mol-% des Leitsalzes bzw. des Elektrolyten führt.

Bevorzugt wird während des Waschens das Aktivmaterial und/oder der Elektrolyt, im Wesentlichen nicht mit Wasser in Kontakt gebracht. Hierunter wird insbesondere verstanden, dass kein Kontakt mit Wasser stattfindet, der zu einem Reagieren von mehr als 5 mol-%, insbesondere mehr als 1 Mol-%, insbesondere mehr als 0,1 Mol- % des Leitsalzes bzw. des Elektrolyten führt.

Vorzugsweise wird das Zerkleinern bei einer Temperatur durchgeführt, die so niedrig ist, dass sich höchstens 2,5 Mol-Prozent, insbesondere höchstens 1 Mol-Prozent, besonders bevorzugt höchstens 0,5 Mol-Prozent, des Fluors bezogen auf das Zerkleinerungsmaterial zersetzt.

Vorzugsweise wird das binderarme Zerkleinerungsmaterial, insbesondere die binderarme Schwarzmasse mit konzentrierter Schwefelsäure aufgeschlossen und danach gelaugt. Dadurch, dass kaum noch Binder enthalten ist, ist der Verbrauch an Schwefelsäure gering. Es wird daher auf einfache Weise metallionenarmer Graphit erhalten. Dieser kann gegebenenfalls wieder zur Herstellung von Alkalimetall-Batterien verwendet werden.

Die erfindungsgemäße Batterie-Aufbereitungsanlage umfasst vorzugsweise eine Trennvorrichtung, die ausgebildet und angeordnet ist zum Abtrennen von Schwarzmasse von der Restfraktion. Beispielsweise handelt es sich bei der Trennvorrichtung um einen Sichter.

Zusammengefasst ist erfindungsgemäß auch das folgende Verfahren zum Wiederverwerten von Alkalimetall-Batterien, insbesondere Li-Batterien oder Na-Batterien, die
(a) ein Aktivmaterial, insbesondere Graphit,
(b) eine Trägerfolie, auf der das Aktivmaterial angeordnet ist,
(c) Binder, mit dem das Aktivmaterial mit der Trägerfolie verbunden ist,
(d) einen flüssigen Elektrolyten,
(e) Leitsalz und
(f) ein Gehäuse, das Aktivmaterial, Trägerfolie und Binder umgibt, aufweist, gekennzeichnet durch die Schritte
   (i) optional Entladen und Kurzschließen, sodass Regenerations-Spannung unter 0,2 V, insbesondere 0,1 V, liegt,
   (ii) Zerkleinern der Alkalimetall-Batterien, sodass Zerkleinerungsmaterial entsteht, die
      Schwarzmasse, das Aktivmaterial und den Binder enthält, und
   (iii) optional Abtrennen der Schwarzmasse, insbesondere durch Sichten,
   (iv) Waschen des Zerkleinerungsmaterials, insbesondere der Schwarzmasse, mit einem Wasch-Lösungsmittel, sodass Leitsalz ausgewaschen wird und der Binder nicht ausgewaschen wird, sodass leitsalzarmes Zerkleinerungsmaterials, insbesondere leitsalzarme Schwarzmasse erhalten wird,
      wobei das Wasch-Lösungsmittel ein Bestandteil des Elektrolyten ist, so lange waschen, bis höchstens 1%, insbesondere höchstens 0,1 % des Leitsalzes verbleiben Zurückgewinnen des Wasch-Lösungsmittels Abtrennen des Leitsalzes aus dem Rückstand, der beim Zurückgewinnen des Wasch-Lösungsmittels entsteht Abtrennen zumindest eines Lösungsmittels, das ein Elektrolyt-Bestandteil ist und nicht das Wasch-Lösungsmittel ist, vom Rückstand, insbesondere zum Wiederverwerten in neuer Batterie,
   (v) optional Trocknen des leitsalzarmen Zerkleinerungsmaterials, insbesondere der leitsalzarmen Schwarzmasse, (was bei einer Temperatur oberhalb der Siedetemperatur des Wasch-Lösungsmittels erfolgen kann, vorzugsweise unterhalb der Binder-Zersetzungstemperatur erfolgt),
      optional Waschen mit einem zweiten Wasch-Lösungsmittel mit einem niedrigeren Siedepunkt als das Wasch-Lösungsmittel,
   (vi) Herauslösen des Binders aus der leitsalzarmen Schwarzmasse mit einem Binder-Lösungsmittel (das nicht das Wasch-Lösungsmittel ist), sodass binderarmes Zerkleinerungsmaterial erhalten wird,
   (vii) optional Trocknen des binderarmen Zerkleinerungsmaterials und
   (viii) Trennen, insbesondere Sichten, des binderarmen Zerkleinerungsmaterials, sodass eine Graphitfraktion und eine Übergangsmetall-Fraktion, in der zumindest ein Übergangsmetall gegenüber der Graphitfraktion angereichert ist, erhalten wird,
   (ix) Herstellen neuer Batterien, insbesondere Alkalimetall-Batterien, aus Graphit der Graphitfraktion und/oder des Wasch-Lösungsmittels und/oder des abgeschiedenen Leitsalzes.

In einer erfindungsgemäßen Batterie-Aufbereitungsanlage ist der Regenerierer vorzugsweise ein Vakuum-Destillator, der ausgebildet ist zum automatischen Abdestillieren einer Leichtsieder-Fraktion der Wasch-Flüssigkeit, wobei die Leichtsieder-Fraktion die Wasch-Flüssigkeit bildet.

Die Binder-Entfernungsanlage ist vorzugsweise ausgebildet zum Erhitzen des leitsalzarmen Zerkleinerungsmaterials, insbesondere der leitsalzarmen Schwarzmasse, auf eine Temperatur, die oberhalb einer Binder-Zersetzungstemperatur T_{BZ} liegt. Die Binder-Zersetzungstemperatur T_{BZ} ist diejenige Temperatur, für die gilt, dass nach 30 Minuten die Hälfte des Binders zersetzt ist. Auf diese Weise werden Reste des Binders weiter reduziert, sodass das nachfolgende Trennen mit zu einem höheren Anreicherungsfaktor führt.

Im Folgenden wird die Erfindung anhand der beigefügten Zeichnung näher erläutert. Dabei zeigt
- Figur 1: ein Flussdiagramm einer erfindungsgemäßen Batterie-Aufbereitungsanlage und
- Figur 2: ein Flussdiagramm einer erfindungsgemäßen Batterie-Aufbereitungsanlage gemäß einer zweiten Ausführungsform.

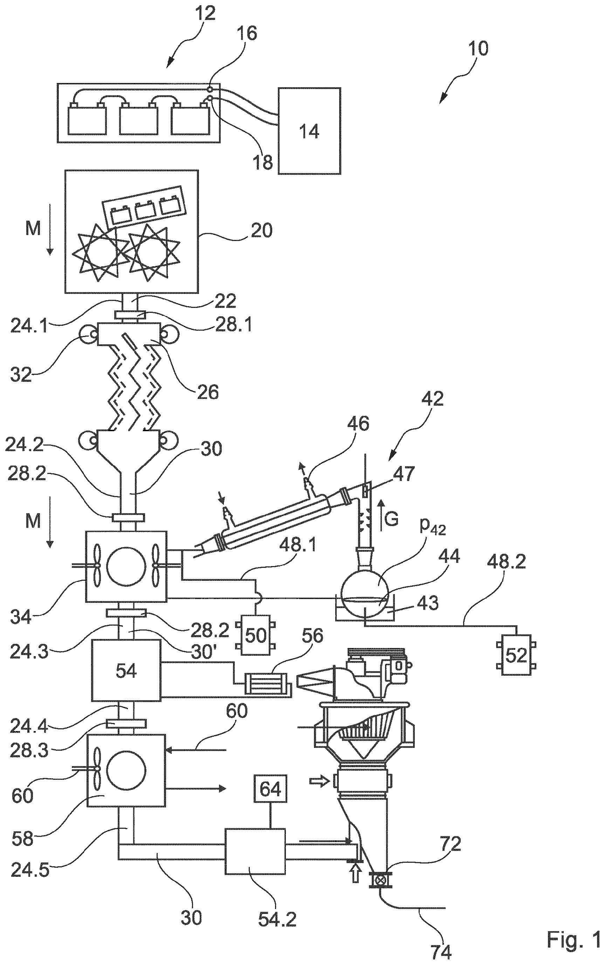

Figur 1 zeigt eine erfindungsgemäße Batterie-Aufbereitungsanlage 10 zum Wiederverwerten von Alkalimetall-Batterien 12, im vorliegenden Fall von Lithium in Form von Lithium-Ionen-Akkumulatoren. Die Alkalimetall-Batterien 12 werden zunächst bevorzugt, nicht aber notwendigerweise, mittels einer Entladevorrichtung 14 entladen. Dabei kann die elektrische Energie in ein Stromnetz, beispielsweise das öffentliche Stromnetz, abgegeben werden, das ist aber nicht notwendig.

Nach dem Entladen werden die Alkalimetall-Batterien 12 bevorzugt, nicht aber notwendigerweise, kurzgeschlossen. In anderen Worten werden ein Pluspol 16 und ein Minuspol 18 miteinander verbunden. Ein elektrischer Widerstand zwischen Pluspol 16 und einem Minuspol 18 ist dabei vorzugsweise kleiner als ein Fünftel, insbesondere ein Zehntel, eines Innenwiderstands der entsprechenden Alkalimetall-Batterie. Das Kurzschließen wird über eine Kurzschlusszeit T_{K} durchgeführt. Die Kurzschlusszeit T_{K} ist so lange gewählt, dass eine Regenerations-Zellspannung U_{reg} unterhalb von U_{reg} = 0,15 V liegt. Beispielsweise gilt Tₛ = 12 Stunden.

Die Alkalimetall-Batterien 12 werden in einer Zerkleinerungsanlage 20 zerkleinert, sodass Zerkleinerungsmaterial 22 erhalten wird. Die Zerkleinerungsanlage 20 ist vorzugsweise so ausgebildet, dass höchstens 5 Masseprozent des Zerkleinerungsmaterials 22 einen Kugeldurchmesser von mehr als 4 cm hat. Der Kugeldurchmesser ist derjenige Durchmesser einer gedachten Kugel minimalen Durchmessers, die das entsprechende Objekt vollständig umgibt.

Das Zerkleinerungsmaterial 22 wird mittels einer, vorzugsweise gasdichten, Leitung 24 zu einer optionalen Trennvorrichtung 26 geleitet. Es ist möglich, nicht aber notwendig, dass in Materialflussrichtung M zwischen der Zerkleinerungsanlage 20 und der Trennvorrichtung eine Schleuse 28.1 angeordnet ist. Die Trennvorrichtung 26 trennt die Schwarzmasse 30 von einer Restfraktion 32. Die Restfraktion 32 umfasst beispielsweise Kunststoffbestandteile eines etwaig vorhandenen Gehäuses oder eines Separators.

Die Schwarzmasse 30 (oder das Zerkleinerungsmaterial 22, wenn keine Trennvorrichtung 26 vorhanden ist) gelangt durch eine, vorzugsweise gasdichte, Leitung 24.2 in eine Waschvorrichtung 34 und wird dort mit einem Wasch-Lösungsmittel 36 in Kontakt gebracht. Das Wasch-Lösungsmittel 36 löst Leitsalz 38 aus der Schwarzmasse 30, sodass eine Wasch-Flüssigkeit 40 entsteht.

Die Wasch-Flüssigkeit 40 gelangt in einen Regenerierer 42, der - wie im vorliegenden Fall - als Vakuum-Destillator ausgebildet sein kann. Statt Vakuum-Destillator kann auch der Begriff Vakuum-Destilliergerät verwendet werden. Der Regenerierer 42 besitzt eine Temperiervorrichtung 43 und trennt die Wasch-Flüssigkeit 40 in zumindest eine Leichtsieder-Fraktion, die das Wasch-Lösungsmittel 36 bildet, und eine Schwersieder-Fraktion 44.

Die höchste Temperatur, die im Vakuum-Destillator 42 an einer Stelle herrscht, die mit Leitsalz in Kontakt ist, wird als Regenerier-Temperatur Tᵣ bezeichnet. Vorzugsweise gilt Tᵣ ≤ 60°C, beispielsweise Tᵣ = 50°C. Die Temperiervorrichtung 43 stellt die Regenerier-Temperatur Tᵣ ein.

Im Vakuum-Destillator 42 herrscht ein Destillier-Druck p₄₂. Der Destillier-Druck p₄₂ ist vorzugsweise so gewählt, dass sowohl Ethylmethylcarbonat (EMC, Kohlensäureethylmethylester) als auch Dimethylcarbonat (DMC, Kohlensäuredimethylester) verdampfen.

Vorzugsweise ist der Destillier-Druck p₄₂ so gewählt, dass keine Substanzen verdampfen, deren Siedepunkt bei Normaldruck (1013 hPa) oberhalb eines Trenn-Siedepunkts Ttrenn liegen. Vorzugsweise gilt Ttrenn > 108°C, beispielsweise gilt Ttrenn = 110°C.

In der vorliegenden Ausführungsform werden das gasförmige EMC und DMC mittels eines Kondensators 46 kondensiert und als Wasch-Lösungsmittel 36 in die Waschvorrichtung 34 zurückgeleitet. In Gasflussrichtung G vor dem Kondensators 46 herrscht kann eine Temperatur im Bereich des Trenn-Siedepunkts Ttrenn herrschen. Es ist günstig, diese Temperatur mittels eines Thermometers 47 zu überwachen.

Ein Teil des Wasch-Lösungsmittels 36 kann, beispielsweise mittels einer Abzugleitung 48.1 abgezogen und einem Elektrolyt-Behälter 50 zugeführt werden. Das Wasch-Lösungsmittel 36 kann, gegebenenfalls nach einer weiteren Aufbereitung, zur Herstellung neuer Alkalimetall-Batterien verwendet werden.

Im Vakuum-Destillator 42 verbleibt die Schwersieder-Fraktion 44, die das Leitsalz enthält. Die Komponenten der Schwersieder-Fraktion 44 haben einen Siedepunkt oberhalb des Trenn-Siedepunkts Ttrenn. Die Schwersieder-Fraktion 44 wird, beispielsweise mit einer zweiten Abzugleitung 48.2 abgezogen und kann einem Transportbehälter 52 zugeführt werden.

Der Destillier-Druck p₄₂ ist vorzugsweise kleiner als 286 hPa, insbesondere kleiner als 233 hPa, besonders bevorzugt kleiner als 188 hPa, insbesondere kleiner als 150 hPa.

Die Leichtsieder-Fraktion enthält in der vorliegenden Ausführungsform Substanzen, deren Siedepunkt bei Normaldruck zwischen 85°C, insbesondere 88°C und 109°C liegt. Handelt es sich bei den Alkalimetall-Batterien um Lithium-Ionen-Akkumulatoren enthält die Leichtsieder-Fraktion insbesondere Kohlensäuredimethylester und Kohlensäureethylmethylester.

Die Schwersieder-Fraktion 44 enthält in der vorliegenden Ausführungsform Substanzen, deren Siedepunkt bei Normaldruck oberhalb von 110°C liegt.

In der vorliegenden Ausführungsform wird die Waschvorrichtung 34 im Chargenbetrieb betrieben. Das Waschen wird so lange durchgeführt, bis eine vorgegebene Grenz-Konzentration c_{grenz} an Leitsalz in der Wasch-Flüssigkeit 40 unterschritten ist. Die Schwarzmasse 30 wird dann als leitsalzarme Schwarzmasse 30' bezeichnet. Vorzugsweise ist die Grenz-Konzentration c_{grenz} so gewählt, dass zumindest 95 Gewichtsprozent des Leitsalzes aus der Schwarzmasse 30 ausgewaschen wurden.

Die leitsalzarme Schwarzmasse 30' gelangt durch eine optional vorhandene Schleuse 28.2 in einen optionalen Trockner 54. Der Trockner 54 kann - wie im vorliegenden Fall - als Vakuum-Trockner ausgebildet sein, das ist aber nicht notwendig. Im Trockner 54 herrscht dann ein Trockner-Druck p₅₄ von beispielsweise p₅₄ ≤ 300 hPa. Eine Trockner-Temperatur T₅₄ im Trockner 54 liegt vorzugsweise unterhalb von T₅₄ = 60°C. In der leitsalzarmen Schwarzmasse 30' vorhandenes Wasch-Lösungsmittel 36 wird so verdampft und in einem Kondensator 56 auskondensiert.

Der Trockner 54 weist vorzugsweise einen Mischer 57 auf, um den Kontakt zwischen dem Wasch-Lösungsmittel 36 und der Schwarzmasse 30 und damit den Austrag von Leitsalz und Elektrolyt-Komponenten, die nicht das Wasch-Lösungsmittel 36 bilden, zu verbessern.

In Materialflussrichtung M hinter der Waschvorrichtung 34 und im vorliegenden Fall hinter dem Trockner 54 ist eine Binder-Entfernungsanlage 58 angeordnet. Die leitsalzarme Schwarzmasse 30' gelangt durch eine, vorzugsweise gasdichte, Leitung 24.4 und gegebenenfalls eine Schleuse 28.3 in die Binder-Entfernungsanlage und wird dort mit einem Binder-Lösungsmittel 60 versetzt, beispielsweise Dimethylsulfoxid.

Enthält das Binder-Lösungsmittel 60 - wie gemäß einer bevorzugten Ausführungsform vorgesehen - superkritisches Kohlendioxid, so sind die Temperatur und der Druck in der Binder-Entfernungsanlage so gewählt, dass das Kohlendioxid superkritisch ist.

Vorzugsweise liegt eine Binderentfernungs-Temperatur T₅₈ in der Binder-Entfernungsanlage 58 möglichst hoch, insbesondere in der Nähe des Siedepunkts T_{S,60} des Binder-Lösungsmittels 60. Vorzugsweise liegt die Binderentfernungs-Temperatur bei zumindest T_{S,60} = 170°C. Vorzugsweise gilt T_{S,60} = ≤ 400°C, insbesondere T_{S,60} = ≤ 375°C. Um eine möglichst hohe Binderentfernungs-Temperatur zu erreichen ist es günstig, wenn ein Prozessdruck p₅₈ in der Binder-Entfernungsanlage 58 größer ist als der Umgebungsdruck. Vorzugsweise gilt p₅₈ ≥ 1200 hPa, insbesondere p₅₈ ≥ 2000 hPa. Insbesondere ist p₅₈ ≤ 12 MPa.

Die Binder-Entfernungsanlage 58 besitzt vorzugsweise einen Rührer 60 zum Einbringen von mechanischer Energie in die leitsalzarme Schwarzmasse 30'. Günstig ist es, wenn in der Binder-Entfernungsanlage 58 ein pH-Wert von höchstens 9 herrscht.

Die Binder-Entfernungsanlage 58 wird beispielsweise im Chargenbetrieb betrieben. Es wird so oft das Binder-Lösungsmittel 60 getauscht, bis zumindest 40%, vorzugsweise zumindest 50%, des Binders aus der leitsalzarmen Schwarzmasse 30' ausgetragen sind. Nachfolgend wird die so erzeugte binderarme Schwarzmasse 30", beispielsweise mittels einer Leitung 24.5 in einem Trockner 54.2 getrocknet. Es ist möglich, nicht aber notwendig, dass in dem zweiten Trockner eine Temperatur T_{54.2} herrscht, die oberhalb einer Binder-Zersetzungstemperatur T_{BZ} liegt. Etwaig entstehendes Abgas 62 wird mittels einer Abgasreinigungsanlage 64, insbesondere von Fluorwasserstoff, gereinigt und dann in die Umgebung abgegeben.

Die binderarme Schwarzmasse 30‴ gelangt in eine Trennvorrichtung 66, die im vorliegenden Fall als Feinsichter ausgebildet ist. Der Feinsichter 66 besitzt ein Sichtrad 68, das mittels eines Motors 70 auf eine Sichtrad-Drehfrequenz f₆₈ von beispielsweise f₆₈ = 150 1/s gebracht wird.

Durch einen Grobfraktions-Auslass 72 verlässt eine Grobfraktion 74 den Feinsichter 66 und durch einen Feinfraktions-Auslass 76 eine Feinfraktion 78. Die Grobfraktion 74 enthält deutlich mehr Graphit als die Feinfraktion 78 und kann daher auch als Graphitfraktion bezeichnet werden. Die Feinfraktion 78 hingegen enthält deutlich mehr Übergangsmetall als die Grobfraktion 74 und kann daher auch als Übergangsmetall-Fraktion bezeichnet werden.

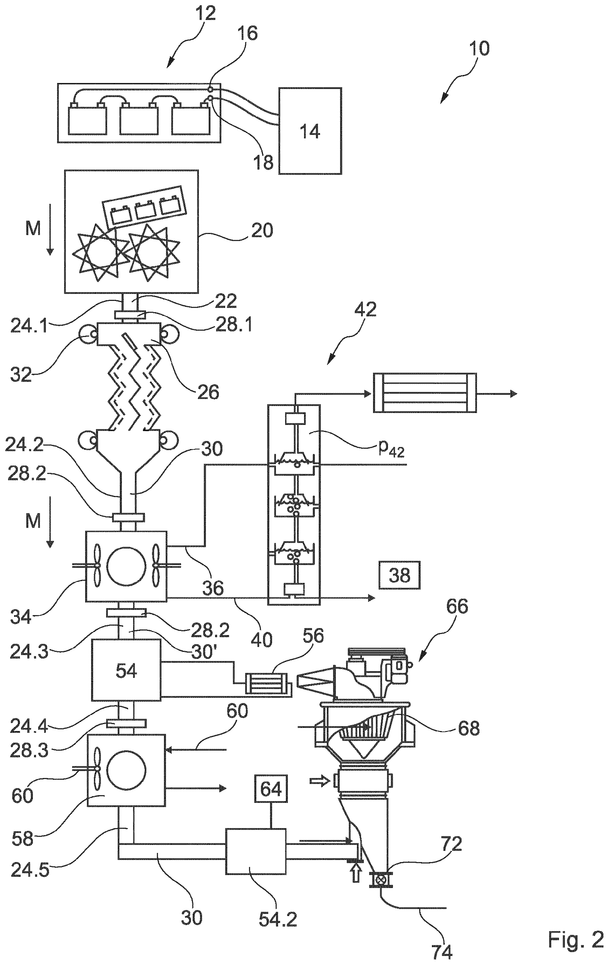

Figur 2 zeigt eine zweite Ausführungsform einer erfindungsgemäßen Batterie-Aufarbeitungsanlage, bei der der Vakuum-Destillator 42 als Rektifikator ausgebildet ist, also als Vorrichtung zum fraktionierten Destillieren.

Günstig ist es in diesem Fall, wenn die Fraktion mit dem niedrigsten Siedepunkt als Wasch-Lösungsmittel 36 verwendet wird oder am Wasch-Lösungsmittel 36 den höchsten Anteil in Gewichtsprozent hat.

**Bezugszeichenliste**

| | | | |
|---|---|---|---|
| 10 | Batterie-Aufbereitungsanlage | 60 | Binder-Lösungsmittel |
| 12 | Alkalimetall-Batterie | 62 | Abgas |
| 14 | Entladevorrichtung | 64 | Abgasreinigungsanlage |
| 16 | Pluspol | 66 | Feinsichter |
| 18 | Minuspol | 68 | Sichtrad |
| 20 | Zerkleinerungsanlage | 70 | Motor |
| 22 | Zerkleinerungsmaterial | 72 | Grobfraktion-Auslass |
| 24 | Leitung | 74 | Grobfraktion |
| 26 | Trennvorrichtung | 76 | Feinfraktion-Auslass |
| 28 | Schleuse | 78 | Feinfraktion |
| 30 | Schwarzmasse | | |
| 32 | Restfraktion | c_{grenz} | Grenz-Konzentration |
| 34 | Waschvorrichtung | f₆₈ | Sichtrad-Drehfrequenz |
| 36 | Wasch-Lösungsmittel | M | Materialflussrichtung |
| 38 | Leitsalz | p₄₂ | Destillier-Druck |
| | | p₅₄ | Prozessdruck |
| 40 | Wasch-Flüssigkeit | p₅₈ | Prozessdruck in der Binder-Ent-fernungsanlage |
| 42 | Regenerierer | | |
| 43 | Temperiervorrichtung | T₅₄ | Trockner-Temperatur |
| 44 | Schwersieder-Fraktion | T_{K} | Kurzschlusszeit |
| 46 | Kondensator | Tᵣ | Regenerier-Temperatur |
| 47 | Thermometer | U_{reg} | Regenerations-Zellspannung |
| 48 | Abzugleitung | | |
| 50 | Elektrolyt-Behälter | | |
| 52 | Transportbehälter | | |
| 54 | Trockner | | |
| 56 | Kondensator | | |
| 57 | Mischer | | |
| 58 | Binder-Entfernungsanlage | | |

## Patentansprüche

1. Verfahren zum Wiederverwerten von Alkalimetall-Batterien (12), insbesondere Li-Batterien oder Na-Batterien, die
(a) ein Aktivmaterial,
(b) eine Trägerfolie, auf der das Aktivmaterial angeordnet ist,
(c) Binder, mit dem das Aktivmaterial mit der Trägerfolie verbunden ist,
(d) einen flüssigen Elektrolyten,
(e) Leitsalz (38) und
(f) ein Gehäuse, das Aktivmaterial, Trägerfolie und Binder umgibt, aufweist, mit dem Schritt
(i) Zerkleinern der Alkalimetall-Batterien (12), sodass Zerkleinerungsmaterial, das
Schwarzmasse (30), die das Aktivmaterial und den Binder enthält, entsteht,
**gekennzeichnet durch** die Schritte
(ii) Waschen des Zerkleinerungsmaterials mit einem Wasch-Lösungsmittel (36), sodass Leitsalz (38) ausgewaschen wird und der Binder nicht ausgewaschen wird, sodass leitsalzarmes Zerkleinerungsmaterial und eine Wasch-Flüssigkeit (40) erhalten werden,
(iii) Regenerieren des Wasch-Lösungsmittels (36) aus der Wasch-Flüssigkeit (40), und insbesondere durch Destillieren, und
(iv) Waschen des Zerkleinerungsmaterials mit zumindest einem Teil des regenerierten Wasch-Lösungsmittels (36),
(v) wobei das Wasch-Lösungsmittel (36) ein Bestandteil des Elektrolyten ist.

2. Verfahren nach Anspruch 1, **gekennzeichnet durch** den Schritt nach dem Zerkleinern der Alkalimetall-Batterien (12) Abtrennen der Schwarzmasse (30) von einer Restfraktion (32), insbesondere durch Sichten, wobei die Schwarzmasse (30) mit dem Wasch-Lösungsmittel (36) gewaschen wird.

3. Verfahren nach einem der vorstehenden Ansprüche, **dadurch gekennzeichnet, dass**
eine Waschlösungsmittel-Hauptkomponenten-Konzentration einer Haupt-Komponente des Wasch-Lösungsmittels (36), gemessen in Gewichtsprozent, um höchstens Faktor 10 von einer Leitsalzlösungsmittel-Hauptkomponenten-Konzentration einer Haupt-Komponente des Leitsalz-Lösungsmittels abweicht.

4. Verfahren nach einem der vorstehenden Ansprüche, **dadurch gekennzeichnet, dass**
(a) das Wasch-Lösungsmittel (36) im Wesentlichen nicht mit Wasser in Verbindung gebracht wird und
(b) das Regenerieren des Wasch-Lösungsmittel (36) ein Destillieren und ein Abtrennen des Leitsalzes (38) von der Wasch-Flüssigkeit (40) umfasst.

5. Verfahren nach Anspruch 4, **dadurch gekennzeichnet, dass**
das Regenerieren des Wasch-Lösungsmittels (36) ein Vakuum-Destillieren umfasst, das
bei einer Regenerier-Temperatur (Tᵣ) von höchstens 70°C und/oder einem Druck unterhalb des Dampfdrucks des Wasch-Lösungsmittels (36) bei der Regenerier-Temperatur (Tᵣ) erfolgt.

6. Verfahren nach einem der vorstehenden Ansprüche, **gekennzeichnet durch** die Schritte
(i) Trocknen des Zerkleinerungsmaterials bei einer Temperatur von höchstens 60°C und einem Druck von höchstens 300 hPa und danach und
(ii) vor Waschen Abtrennen von Folienbestandteilen, insbesondere Kunststoff- und/oder Metallfolienbestandteilen.

7. Verfahren nach einem der vorstehenden Ansprüche, **gekennzeichnet durch** die Schritte
(i) nach dem Waschen des Zerkleinerungsmaterials Herauslösen des Binders aus dem leitsalzarmen Zerkleinerungsmaterial mit einem Binder-Lösungsmittel (60), sodass binderarmes Zerkleinerungsmaterial erhalten wird, und
(ii) Trennen, insbesondere Feinsichten, des binderarmen Zerkleinerungsmaterial, sodass eine Graphikfraktion und eine Übergangsmetall-Fraktion, in der zumindest ein Übergangsmetall gegenüber der Graphitfraktion angereichert ist, erhalten wird.

8. Verfahren nach einem der vorstehenden Ansprüche, **gekennzeichnet durch** den Schritt
vor dem Zerkleinern der Batterien Kurzschließen der Batterien bis zumindest 75% der galvanischen Elemente eine Regenerations-Zellspannung (U_{reg}) von höchstens 0,2 Volt, insbesondere höchstens 0,15 Volt, haben.

9. Verfahren nach einem der vorstehenden Ansprüche, **dadurch gekennzeichnet, dass**
die Schritte vor dem Waschen der Schwarzmasse (30) so durchgeführt werden, dass ein Leitsalz (38) der Alkalimetall-Batterien (12) sich zu höchstens 2 Gewichtsprozent zersetzt.

10. Verfahren nach einem der vorstehenden Ansprüche, **dadurch gekennzeichnet, dass**
(a) das Zerkleinerungsmaterial (22) vor dem Waschen nicht mit Wasser in Kontakt gebracht wird,
(b) das Leitsalz (38) nicht zersetzt wird, insbesondere nicht mit Wasser in Kontakt gebracht und nicht erhitzt wird und nicht mit dem Wasch-Lösungsmittel (36) reagiert,
(c) vor und während des Zerkleinerns das Aktivmaterial und/oder ein Elektrolyt, der in den Alkalimetall-Batterien (12) vorhanden ist, nicht mit Wasser in Kontakt gebracht wird,
(d) die Alkalimetall-Batterien(12), das Zerkleinerungsmaterial und/oder die Schwarzmasse (30) vor dem Waschen nicht pyrometallurgisch behandelt wird, insbesondere nicht auf mehr als 300°C erhitzt wird, aufweist, und
(e) das Zerkleinern bei einer Temperatur durchgeführt wird, die so niedrig ist, dass sich höchstens 2,5 Mol-Prozent des Fluors bezogen auf das Zerkleinerungsmaterial (22) zersetzt.

11. Batterie-Aufbereitungsanlage (10) zum Wiederverwerten von Alkalimetall-Batterien(12), insbesondere Li-Batterien oder Na-Batterien, mit
(a) einer Zerkleinerungsanlage (20) zum Zerkleinern der Batterien, sodass Zerkleinerungsmaterial (22) erhalten wird, das Schwarzmasse (30), die das Aktivmaterial und den Binder enthält,
(b) einer Waschvorrichtung (34), die ausgebildet und angeordnet ist zum Waschen zumindest einer Fraktion des Zerkleinerungsmaterials (22), insbesondere von Schwarzmasse (30), mit einem Wasch-Lösungsmittel (36), sodass leitsalzarmes Zerkleinerungsmaterial (22) und eine Wasch-Flüssigkeit (40) erhalten werden, und
(c) einem Regenerierer (42), der
(i) ausgebildet ist zum automatischen Regenerieren von Wasch-Lösungsmittel (36) aus der Wasch-Flüssigkeit (40),
(ii) eine Zuleitung, die mit der Waschvorrichtung (34) zum Leiten von Wasch-Flüssigkeit (40) von der Waschvorrichtung (34) zum Regenerierer (42) verbunden ist, und
(iii) eine Rückleitung, die mit der Waschvorrichtung (34) zum Leiten von Wasch-Lösungsmittel (36) vom Regenerierer (42) zur Waschvorrichtung (34) verbunden ist,
aufweist.

12. Batterie-Aufbereitungsanlage (10) nach Anspruch 11, **dadurch gekennzeichnet, dass**
der Regenerierer (42) ein Vakuum-Destillator ist, der ausgebildet ist zum automatischen Abdestillieren einer Leichtsieder-Fraktion der Wasch-Flüssigkeit (40), wobei die Leichtsieder-Fraktion die Wasch-Flüssigkeit (40) bildet.

13. Batterie-Aufbereitungsanlage(10) nach Anspruch 11 oder 12, **gekennzeichnet durch**
(a) eine Trennvorrichtung (26), die ausgebildet und angeordnet ist zum Abtrennen von Schwarzmasse (30) von einer Restfraktion (32), die in Materialflussrichtung (M) hinter der Zerkleinerungsanlage (20) angeordnet ist und/oder
(b) einen Trockner (54), der in Materialflussrichtung (M) hinter der Waschvorrichtung (34) angeordnet ist.

14. Batterie-Aufbereitungsanlage (10) nach einem der Ansprüche 11 bis 13, **gekennzeichnet durch**
eine Binder-Entfernungsanlage (58), die in Materialflussrichtung (M) hinter der Waschvorrichtung (34) angeordnet ist und ausgebildet ist zum automatischen Herauslösen von Binder aus dem leitsalzarmen Zerkleinerungsmaterial (22) mittels eines Binder-Lösungsmittels (60).

15. Batterie-Aufbereitungsanlage (10) nach einem der Ansprüche 11 bis 14, **gekennzeichnet durch**
einen Sichter zum Sichten der binderarmen Schwarmasse zum Erzeugen einer Graphitfraktion und einer Übergangsmetall-Fraktion, in der zumindest ein Übergangsmetall gegenüber der Graphitfraktion angereichert ist, wobei der Sichter ein Feinsichter (66) ist, der ein Sichtrad (68) aufweist.
